Europäisches Patentamt

European Patent Office

Office européen des brevets

(19)

(11) Numéro de publication: **0 018 933 B1**

(12) **FASCICULE DE BREVET EUROPEEN**

(45) Date de publication du fascicule du brevet:
**23.11.83**

(21) Numéro de dépôt: **80430008.5**

(22) Date de dépôt: **30.04.80**

(51) Int. Cl.³: **A 01 G 27/00**

�</br>

54 **Dispositif de grille avec garniture absorbante intégrée pour bac de culture.**

(30) Priorité: **04.05.79 FR 7911682**

(43) Date de publication de la demande:
**12.11.80 Bulletin 80/23**

(45) Mention de la délivrance du brevet:
**23.11.83 Bulletin 83/47**

(84) Etats contractants désignés:
**AT BE CH DE GB IT LI NL SE**

(56) Documents cités:
**BE - A - 542 108**
**DE - A - 2 019 423**
**FR - A - 426 964**

(73) Titulaire: **Manufacture Provençale de Matières Plastiques SA, 7 Traverse du Portugal, F-13010 Marseille (FR)**

(72) Inventeur: **Zeltner, Bernard, 7, Traverse du Portugal, F-13010 Marseille (FR)**

(74) Mandataire: **Roman, Alphonse, 35 Rue Paradis, F-13001 Marseille (FR)**

Dispositif de grille avec garniture absorbante intégrée pour bac de culture

L'objet de l'invention consiste en la réalisation d'un dispositif de grille avec garniture absorbante pour bac de culture.

Il est destiné à permettre une régularisation d'humection avec secteur plongeant et surface réparatrice séparée du contact direct total de la masse terreuse.

Dans les dispositifs connus comportant des grilles en matériau rigide, on plaçait généralement les garnitures absorbantes à la partie supérieure en contact direct avec la terre. Il en résultait, que la partie plongeante alimentait la surface immédiatement attenante d'une façon excessive, alors que les parties éloignées demeuraient séches. C'est ce qui se produisait et rendaient les dispositifs décrits par les FR-A-426964, DE-A-2019423 et RE-A-542108 pratiquement inéfficaces.

Le dispositif suivant l'invention supprime ces inconvénients et permet d'obtenir une grille avec garniture absorbante intégrée donnant la possibilité de réaliser une fabrication automatisée de l'ensemble, tout en assurant une répartition équilibrée de l'humidification sur la totalité de la surface avec régulation des zones d'humection et d'aération.

Il est constitué par une grille à alvéoles cloisonnées autostructurantes pour bac de culture avec réservoir d'eau, comprenant une garniture absorbante disposée sur la face inférieure de la grille, une masse de terre étant disposée sur la surface supérieure de la grille, la garniture absorbante comprenant un secteur plongeant dans le réservoir d'eau et il est caractérisé par le fait que la grille comporte de part et d'autre de l'axe longitudinal des bordures longitudinales délimitant une partie médiane évidée en dessous de laquelle est maintenue la garniture à l'aide de tiges ou profils structurant la surface médiane de la grille et retenant en coopération avec la garniture qu'elle maintient la masse de terre, ces tiges ou profils formant des cloisons séparatrices canalisant les veines de capillarité dans la garniture d'une humection par capillarité et définissant ainsi des secteurs d'aération.

Sur les dessins annexés, donnés à titre d'exemple non limitatif d'une des formes de réalisation de l'objet de l'invention:

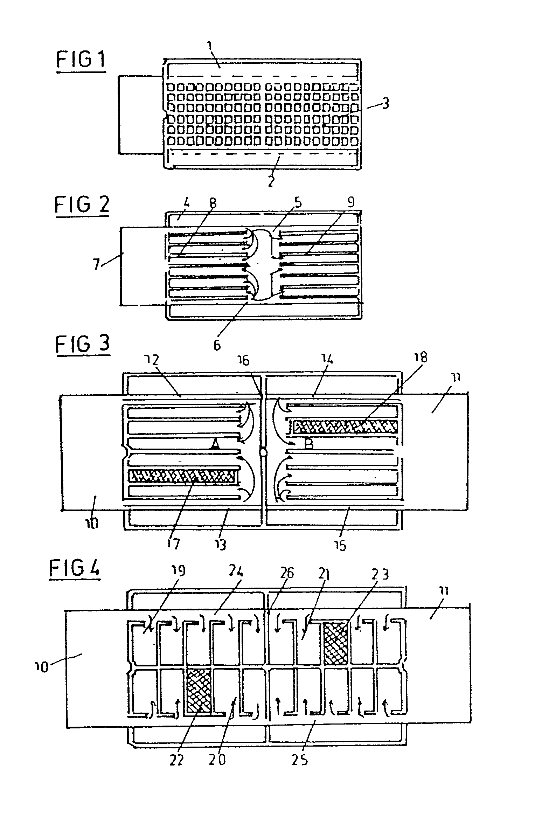

La figure 1 montre la grille vue en plan par le dessus: la figure 2 représente le même objet vu en plan par en dessous avec garniture absorbante; les figures 3 et 4 sont des modes de réalisation d'une des possibilités de régulation de l'humection.

La grille fig 1, 2, est constituée par une surface portante avec bordures 1 et 2 et partie axiale 3 évidée avec alvéoles profonds structurant sa surface et retenant la masse terreuse en divisant ses parties en contact avec la toile; sa face inférieure 4 reçoit une garniture absorbante tel un tissu, toile humectable ou similaire qui recouvre la totalité de la grille et déborde sur ses parties latérales 5, 6, pour former des secteurs de pompage, libres et non en contact avec la masse terreuse supérieure; une languette 7 plonge dans le réservoir inférieur à une profondeur déterminée et n'atteignant pas, préférentiellement le fond; la toile ou garniture absorbante, sur le secteur recouvrant la face inférieure de la grille est assemblée à cette dernière par des tiges 8, 9 et autres, déterminant les secteurs d'humidification; ces profils 8, 9 assurent en même temps qu'un enveloppement étanche de la garniture absorbante, une structuration de la grille qui est ainsi renforcée; suivant les figures 3 et 4, on réalise une double languette de pompage 10, 11 avec canaux d'humection 12, 13, 14, 15 et cloison séparatrice 16 canalisant les veines de capillarité suivant les flèches A et B; les secteurs 17, 18 étant isolés, sont utilisés pour l'aération des bandes de terre, alors que les autres répartissent l'humidité; cette réparation fig 4, est divisée en secteurs transversaux 19, 20, 21, 22 et autres avec secteurs d'aération 22, 23 isolés de la capillarité de l'ensemble par le cerclage en résine synthétique; les secteurs plongeants 10, 11, alimentent en continu par les couloirs 24, 25 les surfaces séparées par le cloisonnement étache 26; on a alors une répartition uniforme dosant l'afflux de fluide tant que les secteurs 10, 11 plongent dans l'eau du réservoir.

Dès que le niveau d'eau s'est abaissé de façon à ne plus contacter le tissu absorbant, la grille laisse passer les évaporation et condensations humidifiant alors l'ensemble des surfaces.

Les secteurs dit d'aération ne sont plus sélectifs et assurent la réparation de l'humidification.

**Revendication**

1. Dispositif de grille à alvéoles cloisonnées autostructurantes pour bac de culture avec réservoir d'eau, comprenant une garniture absorbante disposée sur la face inférieure (4) de la grille, une masse de terre étant disposée sur la surface supérieure de la grille, la garniture absorbante comprenant un secteur plongeant (7, 10, 11) dans le réservoir d'eau caractérisé par le fait que la grille comporte de part et d'autre de l'axe longitudinal des bordures longitudinales (1, 2) délimitant une partie médiane évidée en dessous de laquelle est maintenue la garniture à l'aide de tiges ou profils (8, 9) structurant la surface médiane de la grille et retenant en coopération avec la garniture qu'elle maintient la masse de terre, ces tiges ou profils formant des cloisons séparatrices canalisant les veines de capillarité dans la garniture d'une humection par capillarité et définissant ainsi des secteurs d'aération.

**Claim**

1. Grid device with partitioned reinforcing cells for cultivation trough with reservoir of water, comprising an absorbent lining disposed on the lower face (4) of the grid, a mass of earth being disposed on the upper surface of the grid, the absorbent lining comprising a portion (7, 10, 11) dipping into the reservoir of water characterized by the fact that the grid comprises at each side of the longitudinal axis longitudinal borders (1, 2) bounding a hollowed out median part below which the lining is supported with the aid of rods or shaped elements (8, 9) reinforcing the median surface of the grid and retaining the mass of earth in cooperation with the lining which it supports, these rods or shaped elements forming separating partitions channeling the flows of capillarity in the lining of a humidification by capillarity and thus defining zones of aeration.

**Patentanspruch**

1. Gitterteil mit geschlossenen selbsttragenden Zellen für Kulturgefässe mit Wasservorratsbehälter und mit einer saugfähigen Auflage an der Unterseite (4) des Gitters, wobei auf der Gitteroberseite eine Erdfüllung liegt und die saugfähige Auflage einen in den Wasservorratsbehälter eintauchenden Abschnitt (7, 10, 11) aufweist, dadurch gekennzeichnet, dass das Gitter beiderseits der Längsachse Längskanten (1, 2) aufweist, die einen durchbrochenen Mittelteil begrenzen, unterhalb dessen die Auflage gehalten wird mit Hilfe von Stäben oder Profilteilen (8, 9), die die Mittelfläche des Gitters aufgliedern und in Verbindung mit der daran befestigten Auflage die Erdfüllung tragen, und dass die Stäbe oder Profilteile Trennwände bilden, die die Kapillaritätsströme in der Auflage zur Befeuchtung durch Kapillaritätswirkung in bestimmte Richtungen lenken und auf diese Weise Belüftungszonen abgrenzen.

0018933

FIG 1

FIG 2

FIG 3

FIG 4

5